# EUROPEAN PATENT APPLICATION

(11) **EP 2 624 191 A1**
(43) Date of publication of application: **07.08.2013**
(21) Application number: 13153818.3
(22) Date of filing: 04.02.2013
(51) Int. Cl.: G06Q 20/12, G06Q 30/06

(54) **A method and a system for purchasing an item**

(30) Priority: 03.02.2012 FI 20125123
(71) Applicant: Tolonen, Markku, 02120 Espoo (FI); Holopainen, Eve, 01200 Vantaa (FI)
(72) Inventor: Tolonen, Markku, 02120 Espoo (FI); Holopainen, Eve, 01200 Vantaa (FI)
(74) Representative: Tampereen Patenttitoimisto Oy

(57) **Abstract**

The invention relates to a method for providing an item for purchasing. The method comprises obtaining information of the item; forming a data record; and attaching the information of the item to the data record. The method further comprises providing a network address for the data record to make the data record accessible via a communication network by the network address; forming a payment element for the item including information for payment of the item; and attaching the payment element to the data record to enable payment of the item. The invention also relates to a system for providing an item for purchasing.

## Description

### Field of the Invention

The present invention relates to a method for providing an item for purchasing. The invention also relates to a system for providing an item for purchasing.

### Background of the Invention

The increasing use of communication networks such as internet and computers have provided a fast way to advertise products (items) to a large amount of consumers. Also purchasing products via internet has become possible and for that purpose many network stores can be found. This has the effect that such electronic commerce systems have increased their popularity among consumers and many people use such electronic commerce systems to by different kinds of products via the internet.

A typical electronic commerce system comprises a list of items available via the electronic commerce system so that the consumer can check out at least some details of the item before deciding whether to buy the item or not. The consumer may even be given an option to see different alternatives of the item, for example different colours, different sizes etc.

Electronic commerce systems usually comprise a virtual shopping cart into which the consumer can virtually collect the items and the quantity of the items he/she desires to buy. After collecting the items to the shopping cart a consumer may pay the items using the shopping cart and a payment option of the electronic commerce system. The payment may be performed e.g. by a credit card wherein the consumer gives details of his/her credit card and the information of the credit card is delivered to the system of the credit card company for checking the validity of the credit card and for registering the payment for invoicing.

Such an electronic commerce system may be complicated and may need a lot of work to maintain the electronic commerce system and update the details of the items and the quantity of the items etc.

### Summary of the Invention

An aim of the present invention is to provide an improved method and system for purchasing an item using a communication network. In some embodiments of the method a manufacturer of the item, an importer of the item, a retail dealer of the item, or even a consumer may obtain information of the item and form a data record relating to the item so that information of the item can be attached to the data record. A network address may be provided for the data record to make the data record accessible via the communication network by the network address. Further, a payment element for the item may be formed including information for payment of the item; and the payment element may be attached to the data record to enable payment of the item.

Different aspects of the invention are provided in the claims.

According to a first aspect there is provided a method for providing an item for purchasing comprising:
- obtaining information of the item;
- forming a data record; and
- attaching the information of the item to the data record;
- providing a network address for the data record to make the data record accessible via a communication network by the network address;
- forming a payment element for the item including information for payment of the item; and
- attaching the payment element to the data record to enable payment of the item.

According to a second aspect there is provided a system for providing an item for purchasing comprising:
- means for obtaining information of the item;
- means for forming a data record; and
- means for attaching the information of the item to the data record;
- means for providing a network address for the data record to make the data record accessible via a communication network by the network address;
- means for forming a payment element for the item including information for payment of the item; and
- means for attaching the payment element to the data record to enable payment of the item.

The invention has advantages compared to solutions of prior art. By using the present invention each data record forms an electronic commerce system of its own so that the system is only related to the item in question. The number of items in the electronic commerce system may vary but the items in one electronic commerce system are related to each other. For example, the items are similar products but some detail may vary, e.g. the colour and/or the size. Therefore, it is not necessary to establish a complicated electronic system and collect data of each items into the system. The data record may be delivered via the communication system to importers, retail dealers, consumers and others who might be interested in to buy or sell the item. When all the items of the data record have been sold the data record and thus the respective electronic commerce system may be removed or it may remain in the system for example for giving the possibility to obtain warranty information, service information, manuals and/or other information relating to the item.

### Description of the Drawings

In the following, the present invention will be described in more detail with reference to the attached drawings, in which:
- Figure 1: depicts an example of a communication network in which an electronic commerce system according to the present invention can be implemented;
- Figure 2: depicts an example of a data record according to an embodiment of the present invention; and
- Figure 3: depicts a simplified flow diagram of a purchasing transaction.

### Detailed Description of the Invention

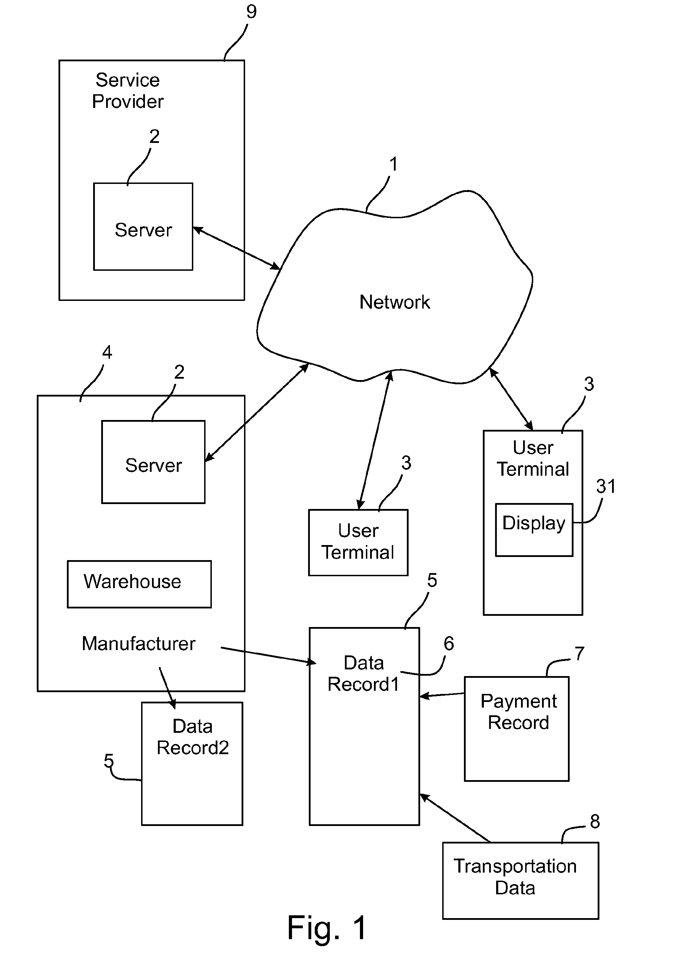

Figure 1 depicts an example of a communication network 1 in which an electronic commerce system according to the present invention can be implemented. The communication network 1 may comprise different kind of networks such as internet, wireless local area networks (WLAN), mobile communication networks such as GSM, UMTS, etc. The communication network may include gateways (not shown) to enable communication between different kinds of communication networks, servers 2, and user equipment 3. The communication network 1 may also comprise other elements but it is not necessary to describe them in more detail in this context.

In the following the term item relates to any kinds of products which may be purchased by using the present invention. Such products may be clothes, vehicles, electronic devices, household equipment, computers, computer accessories, software programs, just to mention a few of them. Although the term *item* is often used in singular form in this application, the term *item* may mean a multiple of the items in question.

It should also be noted that the terms *user, other user, person* etc. used in the following description need not mean a human being but may also mean a firm, a reseller, a merchandizer, a mall, an importer, a manufacturer etc.

When the manufacturer 4 of the item wishes to put the item on sale in the communication network, the manufacturer may establish an electronic commerce system 5 for that product. This may be performed by creating a data record in which information of the item may be included. Information of the item may at least partly depend on the item in question. For example, size and colour may be relevant information with clothes but e.g. with computer accessories the relevant information may be quite different from size and colour. Therefore, the examples of the data record provided in this application shall not be regarded as restricting the present invention.

Information included in the data record may also comprise quantity of available items so that no more items are sold than are available. The quantity may refer to the number of items in a factory, the number of items in a warehouse of the manufacturer, the number of items in a warehouse of a retail dealer, the number of items in a shop, the number of items in a consumer's home, etc. The data record may also be provided with the price of the item and possibly information on conditions for a reduced price. Such conditions may include a discount per cent when the consumer buys certain amounts of the items. In some embodiments the consumer who has recommended the item to other consumers may obtain a certain discount or he/she may be refunded a part of the original amount he/she has paid of the item(s), if a certain number of other consumers have purchased the item and indicated that the item has been recommended by the consumer. In a yet another example the reduction may be provided to all buyers if one of them first collects a certain number of buyers or more. For example, if somebody collects at least a group of ten persons who buys the product a retail dealer may offer 15 % discount on the price to each of the group.

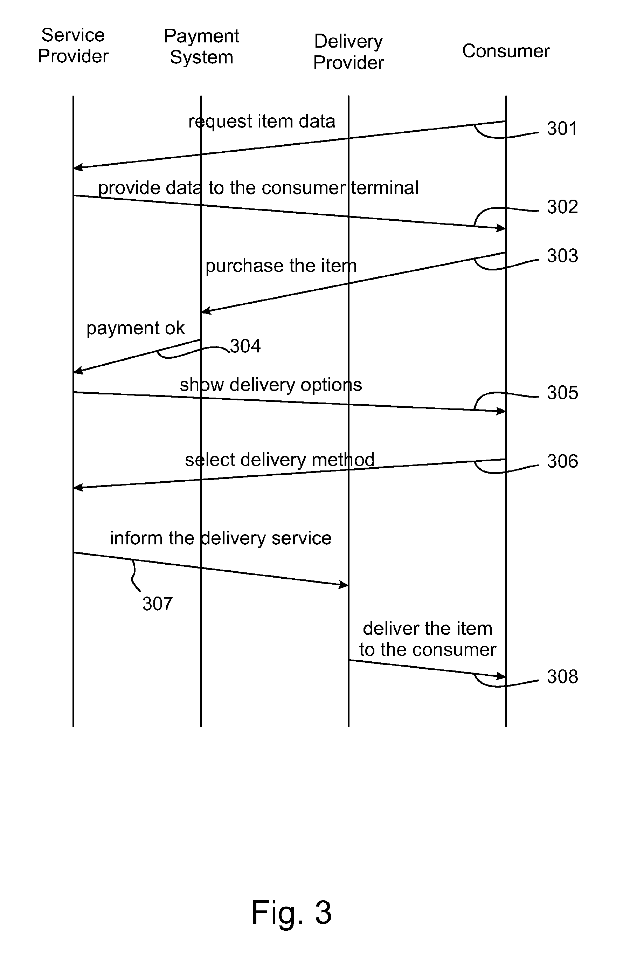

When sufficient amount of information has been included in the data record i.e. the data record has been completed, it can be "converted" to an electronic commerce system. This includes providing the data record an individual network address so that it can be accessed via the network. The address may be obtained by registering the data record to the service provider 9. Then, the data record is reserved an address and consumers can search the data record from the communication network in the same way than web pages are searched from the internet. If the consumer is aware of the actual address of the data record, he/she may enter the address e.g. in an address field of a web browser in the computer 3 of the consumer, which is technique known from internet browsing. This step is illustrated with the arrow 301 in Figure 3.

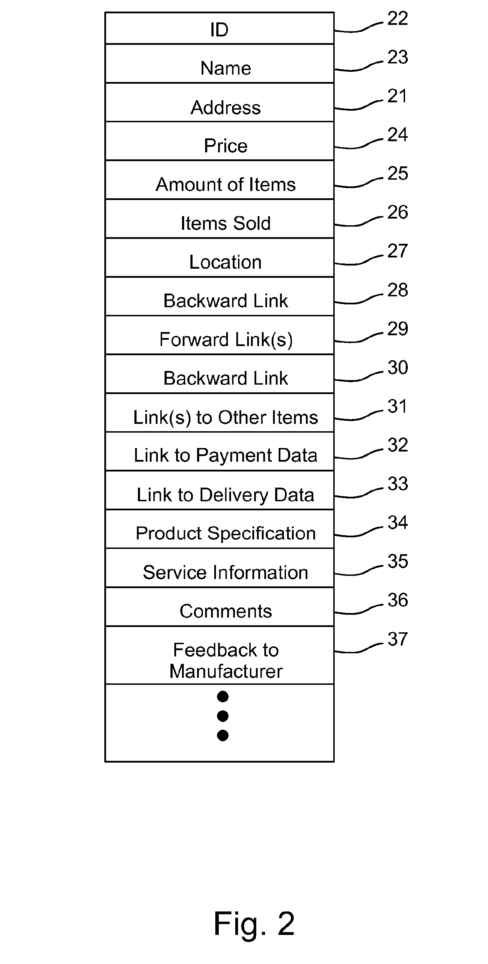

When the consumer has obtained the data record 6 information of the data record may be shown on a display 31 of the computer 3, for example. For that purpose, the data record 6 may be downloaded 302 from the server 2 the data record has been stored in to the computer 3 via the communication network. The computer 3 may use e.g. a browser application or another appropriate program to read information from the data record and provide the information in an appropriate form to be shown to the user on the display 31. The user may then examine the information to decide whether to purchase the item or not. If the user decides to purchase the item he/she may indicate the decision by entering e.g. the number of items he/she wishes to buy, and other information on the item such as the colour and the size of the item(s). The data record 6 has or is attached with a payment element 7 which can be used to order and pay 303 the item(s). The payment element 7 may, for example, be a piece of software which includes necessary steps for enabling the payment. The piece of software may comprise e.g. HTML instructions and they may be linked with the data record 6 or be a part of the data record 6. The payment element 7 may be indicated e.g. by a link 32 (Figure 2) to the payment element 7. Information on a successful payment may be provided 304 to the seller of the item so that the seller knows whether the item can be delivered to the consumer or not.

In some example embodiments the user may also be able to buy delivery of the item. For example, there may be a number of delivery options 305 to select from and the user may then select 306 that delivery option which seems appropriate for the user. Some examples of the delivery options include postal services, courier services, cargo services, or other transportation services. In some embodiments even electrical transfer of the item may be possible if the item is e.g. a software program.

The transportation services 8 may be implemented in the same way than the data records 6 of the items. In other words, a transportation service provider may insert a transportation data record into the system and this data record can be downloaded to the user's computer 3 so that the user may select the transportation service. When the transportation service has been selected and paid, if necessary, the transportation data record may be linked 33 with the data record 6 of the item, or the transportation data record may be used as such to indicate 307 the transportation services provider which kind of item has been bought and which kind of transportation service has been selected. The transportation service provider is also informed the location, if not already known, from where the item can be picked up for transportation and the location where the item should be transported 308.

In some embodiments the transportation data record can also be used to find out where the purchased item is located. For example, when the item has been picked up for transportation, the transportation data record may be included in with that information. If the transportation of the item utilizes a transportation chain in which the item has to be moved at some point(s) from one vehicle to another vehicle, information on this may also be added to or changed in the transportation data record. When the item is supplied to the purchaser, information on this may also be updated to the data record.

When all the items relating to a data record have been purchased the data record may be updated accordingly. The number of items which remain available after the purchase is reduced with the same amount than items actually purchased. If the amount of available items becomes zero the data record may still remain in the system but no items may not be bought using this data record until more items becomes available for purchasing. In some other embodiments no items may not be bought using this data record if the amount of available items becomes less than a threshold until the amount for available items becomes greater than the threshold. The threshold is greater than zero and may be used to maintain a certain amount of items e.g. for warranty replacements in a warehouse.

The data record may also contain statistical information relating to the item. For example, the total number of items may be included in as well as an average price, total price of all sold items, information on locations from where the items have been bought, information on who has bought the items etc. This information may be provided e.g. to the manufacturer of the item, to the importer of the item, etc. so that user's behaviours may be taken into account in future actions relating to the item or to other similar items. However, there may be legislation in some jurisdiction which may prohibit from collecting user related information such as identification details of purchasers.

As was mentioned above a data record forms a kind of item-based electronic commerce system. There is no need to reserve a fixed web address for the electronic commerce system but the system provider may provide a web address for the data record when the data record has been loaded to the system, e.g. to the server 2 of the system. As an example, the service provider may provide a registration utility for users who wish to provide items for purchase via the system according to the present invention. The registered users may then load data records included in information of a data item the user intends to sell. If the user wishes to sell more than one kinds of items, a data record is formed for each different kind of item.

In an example embodiment the web address may be formed in one or more of the following ways: user.item.service_provider.com, item.service_provider.com, www.item.service_provider.tv, www.item_id.service_provider.eu.

In some embodiments the data record may also be copied if somebody else wishes to provide an item for sale by using the system of the present invention. Hence, the other user may download the original data record and copy it as a basis for a new data record. This new data record can then be loaded to the system and the new data record becomes a new electronic commerce system for the items provided for purchasing by the other user. The other user may then modify some details to fulfill the other user's needs. For example, the other user may be a local store in which the same item is being provided for purchasing but with different conditions. The price of the item may be different from the price of the originating entity, price reduction conditions may be different, etc. With some items the country of the user may require some modifications to the item so that it can be used in that country and these local variations may be taken into consideration in the data record for that item.

When a data record is copied from an existing data record, the source data record may be provided with information that there is another data record for that kind of items. The information may be a link to the copy (destination) data record. The link may be indicated with the address of the copied data record. This information makes it easier to update all data records related to the same item, if necessary.

In some embodiments a user who has obtained a data record relating to an item may be able to provide the data record further to another user who might wish to buy or sell the item. This can be utilized e.g. as a second-hand store wherein the user who would like to sell or give the item to someone else may use the data record to advertise the item. If somebody else gets interested in to buy or get that item, he/she may then use the data record for buying the item.

In some embodiments the provider of the item may set limits to the copying of data records. For example, the provider may define that the data record may only be copied twice wherein e.g. the buyer of the item may provide the data record to another person who is not be able to provide the data record further.

The system may also be included with information who is allowed to copy a data record to establish his/her own electronic commerce system for the item. This information may be defined e.g. when one registers to the system. The manufacturer of the item may define access rights or other rights for the retail dealer and/or the importer to the data record when the retail dealer and/or the importer purchases the item or orders the item to be sold e.g. in shops. It may also be possible that corresponding access rights may be provided to a consumer who has bought the item by using the data record. There may also be different levels of access rights. At some levels the access rights holder may be allowed e.g. to copy the data record, modify its contents, and link the data record to other data records, whereas at some other levels the access rights holder may only be allowed to transfer the data record to another i.e. even rights to copying may be denied.

In an example embodiment a user has his/her own facebook page into which the user may insert information of the item by using the data record. The data record may then be downloaded from the facebook by another user for getting more information on the item and for purchasing the item.

In a situation in which properties of the item have changed, the present invention can provide a relatively easy way to update information regarding the item in the data record of the item. For example, if the manufacturer changes the design of an item and the manufacturer has previously formed a data record for such item, the manufacturer may update information in the data record. This updated information is then visible when a user downloads the data record for viewing. Moreover, if there are other data records linked to the original data record the updated information can also be provided to all the other data records linked to the original data records. Thus, the other data records need not be updated manually but it may be an automated procedure. In this example the original data record is the data record created and updated by the manufacturer.

The data records according to the present invention may also be used to provide more detailed information 34 of the items, manuals, troubleshooting guides, origin of the item, manufacturer of the item etc.

In some embodiments the data record may also be used to provide comments 36 on the item. For example, users may add his/her experiences on the item as a comment into the data record wherein other users are able to read comments from others. This kind of commenting feature can also be used to give feedback 37 to the manufacturer of the item so that the manufacturer becomes aware of some faults in the item, possible improvements to the item, etc.

It may also be possible to link data records of different kinds of items to each other. This may be useful when some items are related to each other, for example different kinds of furniture, different clothes, computers and computer accessories, just to mention of few. This kind of linking may be implemented e.g. in the same way than the data records copied from the original data record as was disclosed above.

In the following an example of a data record according to the present invention is illustrated with reference to Figure 2. The data record may comprise an address field 21 in which the address of the data item can be stored. There may also be an item identifier 22 which identifies the item. The item identifier 22 may be in a text form or in another appropriate form. The item identifier may contain the name 23 of the item, the manufacturer of the item, the importer of the item, the retail dealer of the item, an EAN code of the item and/or another information uniquely identifying the item. The data record may further comprise the price 24 of the item, the number 25 of items available for purchasing, the location 27 of the item, the number of items sold 26, and a description 34 of the item. The data record may still comprise the link 29 to a data record copied from this data record, a link 28 to a data record from which this data record has been copied, one or more links 31 to data records of other items, etc. If the data record is not linked to another data record, the respective link information may be empty (e.g. a string "", a NULL field, or another appropriate kind of data which is interpreted to represent an empty field. Each or some of the fields of the data record may contain an indication of the purpose of the field (e.g. a field type), or the fields are located in certain locations in the data record, to enable correct interpretation of the information stored in the data record.

In some embodiments the length of the data record may vary depending on the information stored in the data record whereas in some other embodiments the length of the data record may be fixed.

In some embodiments the data record may also comprise or is attached with information for displaying the fields of the data record on the display 31 of the computer 3. For example, the information for displaying may indicate the locations of the fields where they should be shown in a browser window, and the length of the fields. The displayed information may also comprise figures, icons, titles etc. for clarifying the contents of the data record. Some of the fields are for displaying information and some other fields are for receiving user commands such as how many items the user have selected to buy, which delivery option the user has selected, comments provided by the user etc.

The present invention may be implemented in many kinds of systems in which information can be transmitted between computers and servers via a communication network. Above the internet was presented as an example of the communication system. Recently, internet has been provided with cloud computing capability meaning *inter alia* that data and applications may be stored into different places in the cloud computing network so that the user need not know the exact location of the data or applications. An example of such a system is a Clouder.tv which is based on cloud computing. Services of the system are based on Linux operating system but also other operating system may be implemented. Services of the system may be based on e.g. ActionScript®- (Adobe Flash), JavaScript®-, PHP- and Ruby programming languages. The services may also utilize CSS-, HTML- and/or XML-mark-up languages. For example, the data records may be implemented using HTML-language definitions.

In the following some examples will be provided. According to a first example there is provided a method for providing an item for purchasing comprising:
- obtaining information of the item;
- forming a data record; and
- attaching the information of the item to the data record;
- providing a network address for the data record to make the data record accessible via a communication network by the network address;
- forming a payment element for the item including information for payment of the item; and
- attaching the payment element to the data record to enable payment of the item.

In some embodiments of the method the data record is used as an electronic commerce system enabling ordering the item and payment of the item via the communication network.

In some embodiments of the method the data record is stored in a server in the communication network.

In some embodiments the method further comprises
- providing information of delivery options of the item; and
- attaching the data record with the information of delivery options.

In some embodiments the method further comprises ordering and payment of the delivery together with ordering and payment of the item.

In some embodiments the method further comprises including information of an amount of available items.

In some embodiments the method further comprises reducing in the data record the amount of items when the item is purchased.

In some embodiments the method further comprises examining the data record to determine the amount of items in the warehouse; and if the amount of items is less than a threshold, disabling ordering of the item by using the data record.

In some embodiments the method further comprises
- forming another data record from the data record; and
- providing a link between the data record and the other data record.

In some embodiments the method further comprises
- amending information in the data record; and
- effecting a corresponding amendment in the other data record having a link with the data record.

In some embodiments of the method the information of the item is provided by at least one of the following:
- a manufacturer of the item;
- a retailer dealer.

In some embodiments of the method the data record is provided by the manufacturer of the item to a retail dealer for providing the item for purchasing.

In some embodiments of the method each data record forms an individual electronic commerce system for purchasing the item.

According to another example there is provided a system for providing an item for purchasing comprising:
- means for obtaining information of the item;
- means for forming a data record; and
- means for attaching the information of the item to the data record;
- means for providing a network address for the data record to make the data record accessible via a communication network by the network address;
- means for forming a payment element for the item including information for payment of the item; and
- means for attaching the payment element to the data record to enable payment of the item.

In some embodiments of the system the data record is an electronic commerce system enabling ordering the item and payment of the item via the communication network.

In some embodiments the system comprises a server in the communication network for storing the data record.

In some embodiments the system further comprises
- means for providing information of delivery options of the item; and
- means for attaching the data record with the information of delivery options.

In some embodiments the system further comprises means for ordering and payment of the delivery together with ordering and payment of the item.

In some embodiments of the system the data record comprises information of an amount of available items.

In some embodiments the system further comprises means for reducing in the data record the amount of items when the item is purchased.

In some embodiments the system further comprises means for examining the data record to determine the amount of items in the warehouse; and if the amount of items is less than a threshold, means for disabling ordering of the item by using the data record.

In some embodiments the system further comprises
- means for forming another data record from the data record; and
- means for providing a link between the data record and the other data record.

In some embodiments the system further comprises
- means for amending information in the data record; and
- means for effecting a corresponding amendment in the other data record having a link with the data record.

## Claims

1. A method for providing an item for purchasing comprising:
- obtaining information of the item;
- forming a data record; and
- attaching the information of the item to the data record;
- providing a network address for the data record to make the data record accessible via a communication network by the network address;
- forming a payment element for the item including information for payment of the item; and
- attaching the payment element to the data record to enable payment of the item.

2. The method according to claim 1, **characterised in that** the data record is used as an electronic commerce system enabling ordering the item and payment of the item via the communication network.

3. The method according to claim 1 or 2, **characterised in that** the data record is stored in a server in the communication network.

4. The method according to claim 1, 2 or 3, **characterised in that** the method further comprises
- providing information of delivery options of the item; and
- attaching the data record with the information of delivery options.

5. The method according to claim 4, **characterised in that** the method further comprises ordering and payment of the delivery together with ordering and payment of the item.

6. The method according to any of the claims 1 to 5, **characterised in that** the method further comprises including information of an amount of available items.

7. The method according to claim 6, **characterised in that** the method further comprises reducing in the data record the amount of items when the item is purchased.

8. The method according to claim 7, **characterised in that** the method further comprises examining the data record to determine the amount of items in the warehouse; and if the amount of items is less than a threshold, disabling ordering of the item by using the data record.

9. The method according to any of the claims 1 to 8, **characterised in that** the method further comprises
- forming another data record from the data record; and
- providing a link between the data record and the other data record.

10. The method according to claim 9, **characterised in that** the method further comprises
- amending information in the data record; and
- effecting a corresponding amendment in the other data record having a link with the data record.

11. The method according to any of the claims 1 to 10, **characterised in that** the information of the item is provided by at least one of the following:
- a manufacturer of the item;
- a retailer dealer.

12. The method according to claim 11, **characterised in that** the data record is provided by the manufacturer of the item to a retail dealer for providing the item for purchasing.

13. The method according to any of the claims 1 to 12, **characterised in that** each data record forms an individual electronic commerce system for purchasing the item.

14. A system for providing an item for purchasing comprising:
- means for obtaining information of the item;
- means for forming a data record; and
- means for attaching the information of the item to the data record;
- means for providing a network address for the data record to make the data record accessible via a communication network by the network address;
- means for forming a payment element for the item including information for payment of the item; and
- means for attaching the payment element to the data record to enable payment of the item.

15. The system according to claim 14, **characterised in that** the data record is an electronic commerce system enabling ordering the item and payment of the item via the communication network.
